(19) Europäisches Patentamt
European Patent Office
Office européen des brevets

(11) Veröffentlichungsnummer: **0 459 260 A2**

(12) # EUROPÄISCHE PATENTANMELDUNG

(21) Anmeldenummer: **91108090.1**

(22) Anmeldetag: **18.05.91**

(51) Int. Cl.⁵: **C08G 8/38**, C08L 61/04, G03F 7/038

(30) Priorität: **31.05.90 DE 4017523**

(43) Veröffentlichungstag der Anmeldung: **04.12.91 Patentblatt 91/49**

(84) Benannte Vertragsstaaten: **BE CH DE FR GB IT LI NL SE**

(71) Anmelder: **BASF Aktiengesellschaft
Carl-Bosch-Strasse 38
W-6700 Ludwigshafen(DE)**

(72) Erfinder: **Nguyen Kim, Son, Dr.
Zedernweg 9
W-6944 Hemsbach(DE)**

(54) **Kondensationsprodukt und damit hergestelltes strahlungsempfindliches Gemisch.**

(57) Die Erfindung betrifft ein Kondensationsprodukt aus einem phenolische Gruppierungen enthaltenden Polymeren und einer Di- oder Polymethylolverbindung, das mindestens eine Gruppierung der allgemeinen Formel

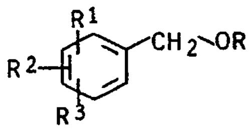

(I)

aufweist, worin R für Wasserstoff oder eine säurelabile Gruppe, $R^1$, $R^2$ und $R^3$ für Wasserstoff, OH, Alkyl oder einen an eine Polymerkette gebundenen Rest stehen.

Dieses Kondensationsprodukt eignet sich zur Herstellung strahlungsempfindlicher Gemische für lichtempfindliche Beschichtungsmaterialien und Reliefstrukturen.

EP 0 459 260 A2

Die Erfindung betrifft Kondensationsprodukte und damit hergestellte strahlungsempfindliche Gemische, die negativ arbeitend sind. Diese Kondensationsprodukte sind in Wasser unlöslich, in wäßrig-alkalischen Lösungen löslich. Durch Kombination mit einer unter Einwirkung von Strahlung eine Säure bildenden Verbindung erhält man Gemische, die sensitiv gegenüber UV, Elektronen- und Röntgenstrahlen sind und sich besonders als Resistmaterial eignen.

Negativ arbeitende Strahlungsempfindliche Gemische sowie Verfahren zur Bildherstellung mittels dieser Gemische sind bekannt. Unter negativ arbeitenden Photoresists werden dabei solche verstanden, bei denen nach der bildmäßigen Belichtung der lichtempfindlichen Schicht die belichteten Bereiche dieser Schicht, gegebenenfalls nach einer zusätzlichen Wärmebehandlung, in der Entwicklerlösung, in der sie vor der Belichtung löslich waren, unlöslich sind.

Im allgemeinen basieren negativ arbeitende Photoresists auf photopolymerisierbaren Gemischen, die neben einem polymeren Bindemittel eine photopolymerisierbare Verbindung und einen Photoinitiator enthalten. Die am meisten verwendeten negativ arbeitenden Photoresists für die Herstellung integrierter Schaltungen enthalten fast ausnahmslos partiell cyclisiertes Polyisopren als vernetzbare Komponente und eine Diazid-Verbindung als lichtempfindlichen difunktionellen Vernetzer. Als Diazide sind hierbei solche der Struktur (A)

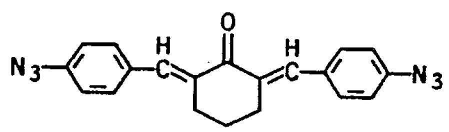

(A)

sehr gebräuchlich.

Neuerdings sind auch negativ arbeitende Photoresists, die aus teilcyclisiertem Polybutadien und Diaziden bestehen, im Handel erhältlich (vgl. auch Harita, Y., Ichigawa, M., Harada, K., Polym. Eng. Sci., 17 (1977), 372).

Eine Reihe negativ arbeitender Photoresists basiert auch auf der Photodimerisierung als Vernetzungsreaktion. Hierher gehören die Zimtsäurederivate und die ihnen im Aufbau verwandten Chalkone. Die Vernetzungsreaktion verläuft im wesentlichen als lichtinduzierte [2+2]-Cycloaddition unter Bildung von Cyclobutanen (vgl. Williams, J.L.R.: Fortschr. Chem. Forsch., 13 (1969), 227; Reiser, A., Egerton, P.L.: Photogr. Sci. Eng., 23 (1979), 144; M. Kato et al: J. Polym. Sci. part B, Polym. Lett. Ed. 8 (1970), 263; M. Kato et al: Photogr. Sci. Eng., 23 (1979), 207).

In den letzten Jahren hat auch noch ein schon längere Zeit bekannter Typ photodimerisierbarer Epoxidharze als Photoresist Verwendung gefunden (vgl. z.B. DE-A-14 47 016; DE-A-23 42 407; DE-A-25 53 346 sowie DE-A-24 49 926). Diese Harze tragen sowohl Gruppierungen, die Photocycloadditionen ermöglichen, z.B. Chalkonreste, als auch Epoxygruppen, die thermisch katalysiert nachvernetzt werden können (vgl. Photoresist, New York: McGraw Hill (1975); GB-PS 892 811 und US-A 2 852 379).

Außer den negativ arbeitenden Photoresisten, die ein Diazid der oben genannten Struktur (A) enthalten, sind die Photoreaktionen nur im NUV-Bereich (d.h. bei 350 bis 450 nm) möglich. Neue Diazidverbindungen für den kurzwelligen UV-Bereich wurden in den letzten Jahren beschrieben. Dazu gehören Ketonverbindungen (vgl. J. Elektrochem. Soc. 128 (1981) 361) sowie schwefelhaltige Diazidverbindungen (vgl. J. Elektrochem. Soc., 127 (1980), 2759).

Auch negativ arbeitende wäßrig-alkalisch entwickelbare Photoresists, die im kurzwelligen UV strukturierbar sind, sind bekannt. Hierzu werden Poly(p-vinylphenol) als Bindemittel und 3,3'-Diazidodiphenylsulfon verwendet (vgl. IEEE Trans. Electron Devices, ED. 28 (1981), 1306; IEEE Trans. Electron Devices, ED-28 (1981), 1284). Ein weiterer wäßrig-alkalisch entwickelbarer negativ arbeitender Photoresist basiert auf einem Oniumsalz und Methylacrylamidoglycolatmethylether (vgl. Hult et al; Polymers for high Tech. ACS Symposium Series 346 (1987), 162 bis 169), der auf dem Prinzip der säurekatalytischen Selbst-Kondensation zur Vernetzung des Bindemittels beruht.

Eine weitere photopolymerisierbare Zusammensetzung, die auf einem säurehärtbaren Material und einem Jodoniumsalz als Säurespender basiert, ist aus der DE-A-2 602 574 bekannt.

Auch säurekatalytische Vernetzer, zu denen beispielsweise die als Zwischenprodukte bei der Kondensation von Phenol/Formaldehyd-Harz erhältlichen Arylmethylolverbindungen gehören, waren bereits bekannt (vgl. Progr. Org. Coat. 9 (1981), 107; DE-A-29 04 961; Plastics and Rubber Processing and Application 1 (1981), 39; DE-A-32 47 754; EP-A-01 39 309; JP-A-63/51424). Auch für photostrukturierbares Aufzeichnungsmaterial hat dieser säurekatalytische Vernetzer Anwendung gefunden. In EP-A-0282724 wird über ein neues negativ arbeitendes System, das auf Poly(p-hydroxystyrol),einem Säurespender und einem Vernetzer

mit mindestens zwei geschützten Methylolgruppen basiert, berichtet; anstelle Poly(p-hydroxystyrol) kann auch m-Kresol-Formaldehyd-Harz eingesetzt werden. Analog wurde in WO-A-88/02878 ein anderes Negativ-System beschrieben, in dem auch Poly(p-hydroxystyrol) oder m-Kresol-Formaldehyd-Novolake als Bindemittel, ein 1,2-Chinondiazid als Säurespender und ein 2,6-Dimethylol-p-Kresol als Vernetzer eingesetzt wird. Nachteile der beiden obengenannten Systeme sind: hohe Herstellungskosten der Ausgangssubstanzen sowie Restschichtbildung, bzw. hohe optische Dichte (≙ niedrige Transmittance) im kurzwelligen Bereich ($\lambda \leqq 300$ nm) des m-Kresol-Formaldehyd-Harzes; daher werden Novolake auf Basis von m-Kresol und Formaldehyd vorzugsweise für Resiste, die im mittleren UV-Bereich (MID-UV: $\lambda$ = 300-380 nm) transparent sind, eingesetzt. Auch eine andere thermisch vernetzende Verbindung, die ein Harnstoff- bzw. Urethan-Formaldehydkondensatprodukt ist, wurde neuerdings in DE-A-3 711 264 als Vernetzer für lichtempfindliche Gemische beschrieben.

Aufgabe der vorliegenden Erfindung war es, neue Kondensationsprodukte aufzuzeigen, die sich als Bindemittel in hochaktiven strahlungsempfindlichen Systemen für die Herstellung von im kurzwelligen UV lichtempfindlichen Schichten, die sich mit wäßrig-alkalischen Lösungen entwickeln lassen, eignen.

Gegenstand der vorliegenden Erfindung sind Kondensationsprodukte, die aus einem phenolische Gruppierungen enthaltenden Polymeren und einer Di- oder Polymethylolverbindung in Gegenwart von Säure erhältlich sind und dadurch gekennzeichnet sind, daß sie mindestens eine Gruppierung der allgemeinen Formel (I)

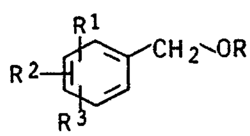

(I)

aufweisen, worin

R für Wasserstoff oder eine säurelabile Gruppe, $R^1$, $R^2$ und $R^3$ untereinander gleich oder verschieden sind und für Wasserstoff, OH, Alkyl mit 1 bis 4 Kohlenstoffatomen oder einen an eine Polymerkette gebundenen Rest stehen, mit der Maßgabe, daß einer der Reste $R^1$ bis $R^3$ an eine Polymerkette gebunden ist.

Für das erfindungsgemäße Kondensationsprodukt werden vorzugsweise als phenolische Gruppierungen enthaltendes Polymer Poly(p-hydroxistyrol), als Di- oder Polymethylolverbindung 2,6-Dimethylol-p-kresol, sowie für die Kondensation als Säure Phosphorsäure eingesetzt.

Das erfindungsgemäße Kondensationsprodukt weist im allgemeinen mittlere Molekulargewichte $\overline{M}_w$ zwischen 200 und 100.000, vorzugsweise zwischen 1000 und 50.000 auf.

Gegenstand der vorliegenden Erfindung ist auch ein Verfahren zur Herstellung der erfindungsgemäßen Kondensationsprodukte, wobei Poly(p-hydroxistyrol) mit 2,6-Dimethylol-p-kresol in einem polaren Lösungsmittel in Gegenwart einer Säure, vorzugsweise Phosphorsäure, bei Temperaturen zwischen 50 und 130 °C kondensiert wird.

Gegenstand der vorliegenden Erfindung ist insbesondere ein strahlungsempfindliches Gemisch, im wesentlichen bestehend aus

(a) einem in Wasser unlöslichen, in wäßrig-alkalischen Lösungen löslichen Bindemittel oder Bindemittelgemisch und

(b) einer bei Bestrahlung eine starke Säure bildenden Verbindung,

das dadurch gekennzeichnet ist, daß als Komponente (a) ein erfindungsgemäßes Kondensationsprodukt eingesetzt wird.

In diesem strahlungsempfindlichen Gemisch ist das Bindemittel (a) im allgemeinen in einer Menge von 80 bis 99,5 Gew.-%, bezogen auf die Gesamtmenge des strahlungsempfindlichen Gemisches, enthalten.

Als bei der Bestrahlung eine starke Säure bildende Verbindung (b) enthält das erfindungsgemäße strahlungsempfindliche Gemisch vorzugsweise ein Oniumsalz der allgemeinen Formel (II) oder (III)

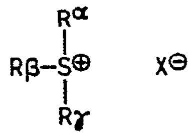

(II)

oder

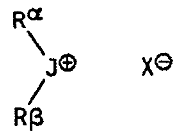

(III)

worin $R^{\alpha}$, $R\beta$ und $R\gamma$ untereinander gleich oder verschieden sind und für Alkyl, Aryl, Aralkyl oder den Rest

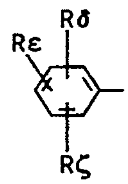

stehen, worin $R\delta$, $R\epsilon$ und $R\zeta$ untereinander gleich oder verschieden sind und für H, OH, Halogen, Alkyl oder Alkoxi stehen und $X^{\ominus}$ = $AsF_6^{\ominus}$, $SbF_6^{\ominus}$, $PF_6^{\ominus}$, $BF_4^{\ominus}$, $C1O_4^{\ominus}$ oder $CF_3SO_3^{\ominus}$ ist, wobei Komponente (b) im allgemeinen in einer Menge von 0,5 bis 20 Gew.-%, bezogen auf die Gesamtmenge des strahlungsempfindlichen Gemisches (a) + (b), enthalten ist.

Das erfindungsgemäße strahlungsempfindliche Gemisch kann zusätzlich einen Sensibilisator enthalten, der Strahlung absorbiert und auf Komponente (b) überträgt, sowie gegebenenfalls zusätzlich bis zu 1 Gew.-%, bezogen auf die Gesamtmenge der Komponente (a) + (b) eines Haftvermittlers, Tensids oder Farbstoffs. Gegenstand der vorliegenden Erfindung ist auch ein Verfahren zur Herstellung lichtempfindlicher Beschichtungsmaterialien, wobei ein erfindungsgemäßes strahlungsempfindliches Gemisch eingesetzt wird, sowie ein

Verfahren zur Herstellung von Reliefstrukturen durch Auftragen eines strahlungsempfindlichen Gemisches in einer Schichtdicke von 0,1 bis 5 µm auf ein in üblicher Weise vorbehandeltes Substrat, Trocknen bei Temperaturen von 70 bis 120 °C, bildmäßiges Belichten, Erhitzen auf Temperaturen von 60 bis 160 °C und Entwickeln mit einer wäßrig-alkalischen Lösung, wobei ein erfindungsgemäßes strahlungsempfindliches Gemisch eingesetzt wird.

Das erfindungsgemäße Kondensationsprodukt läßt sich gut reproduzierbar herstellen und ergibt als Bindemittelkomponente in den erfindungsgemäßen strahlungsempfindlichen Gemischen und bei deren Weiterverarbeitung als Photoresiste sehr vorteilhafte Struktureigenschaften, insbesondere sehr hohe Auflösung im Subhalfmikronbereich, sowie eine wesentliche Verringerung des "delay time"-Effekts. Unter "delay time"-Effekt versteht man den Effekt, der hauptsächlich durch die Diffusion der durch Bestrahlung erzeugten Säureprotonen in der Zeit zwischen Belichtung und Post-exposure-bake von den belichteten Bereichen in die unbelichteten Bereiche festzustellen ist.

Zu den Aufbaukomponenten des erfindungsgemäßen Kondensationsproduktes, des strahlungsempfindlichen Gemisches sowie den Verfahrensbedingungen wird im einzelnen folgendes ausgeführt.

Das erfindungsgemäße Kondensationsprodukt läßt sich aus einem phenolische Gruppierungen enthaltenden Polymeren und einer Di- oder Polymethylolverbindung in Gegenwart von Säure herstellen und weist mindestens eine Gruppierung der allgemeinen Formel (I)

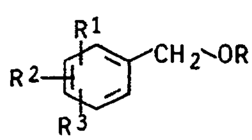

auf, worin

R für Wasserstoff oder eine säurelabile Gruppe, wie z.B. Acetyl, Ethoxycarbonyl oder tert.-Butoxycarbonyl, insbesondere für Wasserstoff, $R^1$, $R^2$ und $R^3$ untereinander gleich oder verschieden sind und für Wasserstoff, OH, Alkyl mit 1 bis 4 Kohlenstoffatomen, vorzugsweise Methyl, oder einen an eine Polymerkette gebundenen Rest stehen, mit der Maßgabe, daß nur einer der Reste $R^1$ bis $R^3$ an eine Polymerkette gebunden ist.

Als phenolische Gruppierungen enthaltende Polymere eignen sich besonders Poly(p-hydroxistyrole). Diese Poly-(p-hydroxistyrole) können mittlere Molekulargewichte $\overline{M}_w$ zwischen 200 und 100.000, vorzugsweise zwischen 1.000 bis 50.000 aufweisen.

Als Di- oder Polymethylolverbindungen eignen sich beispielsweise solche mit 2 bis 4, bevorzugt zwei Methylolgruppen, die an einen aromatischen Kern gebunden sind. Beispiele für bevorzugte Di- und Polymethylolverbindungen sind: 2,6-Dimethylol-p-kresol und 2,6-Dimethylol-p-ethylphenol.

Phenolische Gruppierungen enthaltendes Polymeres und Di- bzw. Polymethylolverbindung werden im allgemeinen in solchen Mengen miteinander zur Reaktion gebracht, daß 5 bis 50 Gew.-%, bezogen auf die Gesamtmenge von Di- oder Polymethylolverbindungen und Poly(p-hydroxistyrol), an Di- oder Polymethylolverbindungen eingesetzt werden.

Die Kondensation erfolgt erfindungsgemäß in Gegenwart von Säure. Hierzu kommen die allgemein üblichen Säuren in Frage, wie z.B. HCl und p-Toluolsulfonsäure. Bevorzugte Säure ist Phosphorsäure, die im allgemeinen in Mengen von 5 bis 50 Gew.-%, bezogen auf die Gesamtmenge von Di- oder Polymethylolverbindungen und Poly(p-hydroxistyrol) eingesetzt wird.

Die Kondensation wird im allgemeinen bei erhöhter Temperatur, beispielsweise zwischen 50 und 130, vorzugsweise zwischen 70 und 100°C in einem polaren organischen Lösungsmittel, beispielsweise in Ethylenglykolmonomethylether in üblichen Misch- bzw. Rühraggregaten durchgeführt.

Die erfindungsgemäßen Kondensationsprodukte weisen im allgemeinen mittlere Molekulargewichte $\overline{M}_w$ zwischen 200 und 100.000, vorzugsweise zwischen 1000 bis 50.000 g/mol auf.

Die erfindungsgemäßen Kondensationsprodukte sind in Wasser praktisch unlöslich, in wäßrig-alkalischen Lösungen jedoch löslich und lassen sich besonders vorteilhaft als Bindemittelkomponente in strahlungsempfindlichen Gemischen verwenden.

Die erfindungsgemäßen Kondensationsprodukte (a) werden hierzu mit einer bei Bestrahlung eine starke Säure bildenden Verbindung (b) kombiniert.

Als bei Bestrahlung eine starke Säure bildende Verbindungen (b) kommen im Prinzip alle Verbindungen in Frage, die diese Eigenschaft aufweisen und so als Säurespender wirksam sind. Für die Bestrahlung mit kurzwelligen UV-Strahlen sind jedoch Iodonium- und insbesondere Sulfoniumsalze bevorzugt. Diese entsprechen den allgemeinen Formeln (II) bzw. (III)

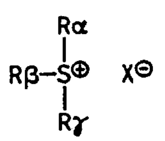
(II)

bzw.

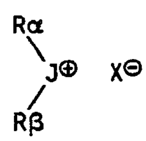
(III)

worin

Rα, Rβ und Rγ untereinander gleich oder verschieden sind und für Alkyl, beispielsweise mit 1 bis 5, vorzugsweise 1 oder 2 Kohlenstoffatomen, Aryl, wie z.B. Phenyl,
Aralkyl, wie z.B. Benzyl,
oder den Rest

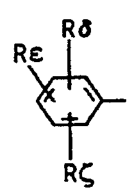

stehen, worin Rδ, Rε und Rζ untereinander gleich oder verschieden sind und für Wasserstoff, OH, Halogen, wie z.B. Chlor oder Brom,
Alkyl, beispielsweise mit 1 bis 5 Kohlenstoffatomen, vorzugsweise Methyl oder tert.-Butyl,
oder Alkoxi, beispielsweise mit 1 bis 5 Kohlenstoffatomen, vorzugsweise Methoxy
stehen und $X^{\ominus} = AsF_6^{\ominus}$, $SbF_6^{\ominus}$, $PF_6^{\ominus}$, $BF_4^{\ominus}$, $C10_4^{\ominus}$ oder $CF_3SO_3^{\ominus}$ (= Triflat) ist.

Beispiele für besonders gut geeignete Komponenten (b) sind Triphenylsulfoniumsalze und Diphenyliodoniumsalze, Tris(4-hydroxiphenyl)-sulfoniumsalze, Tris(trimethylsilyloxi-phenyl)sulfoniumsalze, Tris(4-tert.-

butoxicarbonyl-oxiphenyl)sulfoniumsalze und Tris(4-ethyloxicarbonyl-oxiphenyl)sulfoniumsalze, jeweils mit $X^{\ominus}$ = $C1O_4^{\ominus}$, $AsF_6^{\ominus}$, $PF_6^{\ominus}$, $SbF_6^{\ominus}$, $BF_4^{\ominus}$ und $CF_3SO_3^{\ominus}$ als Gegenionen.

Auch Gemische der unter (b) genannten Verbindungen können eingesetzt werden.

Komponente (b) ist im erfindungsgemäßen strahlungsempfindlichen Gemisch im allgemeinen in Mengen von 0,5 bis 20, vorzugsweise 2 bis 10 Gew.%, Komponente (a) dementsprechend im allgemeinen in Mengen von 80 bis 99,5, vorzugsweise von 90 bis 98 Gew.-% bezogen auf die Gesamtmenge des strahlungsempfindlichen Gemisches (a) + (b) enthalten.

Gegebenenfalls können den erfindungsgemäßen strahlungsempfindlichen Gemischen auch Sensibilisatoren in geringen Mengen zugesetzt werden, um die Verbindungen im längerwelligen UV- bis hin zum sichtbaren Bereich zu sensibilisieren. Polycyclische Aromaten, wie Pyren und Perylen sind hierfür bevorzugt, jedoch können auch Farbstoffe, die als Sensibilisatoren wirken, verwendet werden.

Weiterhin können zusätzlich bis zu 1 Gew.-%, bezogen auf die Gesamtmenge der Komponenten (a) + - (b), eines Haftvermittlers, Netzmittels, Farbstoffs oder Weichmachers zugesetzt werden.

Die erfindungsgemäßen Gemische werden bevorzugt in einem organischen Lösungsmittel gelöst, wobei der Feststoffgehalt im allgemeinen im Bereich zwischen 5 und 40 Gew.% liegt. Als Lösungsmittel kommen bevorzugt aliphatische Ketone, Ether, Ester und aromatische Kohlenwasserstoffe, sowie Mischungen derselben in Frage. Besonders bevorzugt sind Alkylenglykolmonoalkylether, wie beispielsweise Ethyl-cellosolve, Butylglykol, Methylcellosolve und 1-Methoxy-2-propanol, Alkylenglykol-alkylether-ester, wie beispielsweise Methyl-cellosolve-acetat, Ethyl-cellosolve-acetat, Methylpropylenglykol-acetat, und Ethylpropylenglykol-acetat, Ketone, wie beispielsweise Cyclohexanon, Cyclopentanon und Methyl-ethyl-keton, sowie Acetate wie Butylacetat und Aromaten, wie Toluol und Xylol. Die Auswahl der entsprechenden Lösungsmittel, sowie deren Mischung richtet sich nach der Wahl des jeweiligen phenolischen Polymers bzw. Novolaks und der photoempfindlichen Komponente.

Bei dem erfindungsgemäßen Verfahren zur Herstellung von Reliefmustern bzw. Reliefstrukturen wird eine strahlungsempfindliche Aufzeichnungsschicht, die im wesentlichen aus dem erfindungsgemäßen strahlungsempfindlichen Gemisch besteht, bildmäßig in solcher Dosis bestrahlt, daß die Löslichkeit der belichteten Bereiche nach einem thermischen Ausheizschritt bei Temperaturen zwischen 60 und 160°C in wäßrig-alkalischen Lösungsmitteln abnimmt und die unbelichteten Bereiche selektiv mit dem alkalischen Entwickler entfernt werden können.

Das erfindungsgemäße strahlungsempfindliche Gemisch eignet sich besonders als Photoresist zur Herstellung von Reliefstrukturen für Halbleiterbauelemente.

Die das erfindungsgemäße strahlungsempfindliche Gemisch enthaltenden Photoresistlösungen können durch ein Filter mit einem Porendurchmesser von etwa 0,2 µm filtriert werden und werden im allgemeinen in Schichtdicken von 0,1 bis 5 µm, vorzugsweise 0,5 bis 1,5 µm auf geeignete Substrate, beispielsweise oberflächlich oxidierte Silizium-Wafer durch Aufschleudern (spin coating) z.B. bei 1000 bis 10.000 U/Minute, aufgetragen, getrocknet (z.B. 1 bis 5 Minuten bei Temperaturen zwischen 70 und 120, vorzugsweise 80 bis 90°C) und mit einer geeigneten Lichtquelle durch eine Photomaske z.B. eine chrombeschichtete strukturierte Quarzmaske) bildmäßig belichtet. Als Lichtquellen eignen sich insbesondere kurzwellige UV-Strahlen (deep UV) mit Wellenlängen zwischen 200 und 300 nm sowie auch Elektronen- oder Röntgenstrahlen. Besonders geeignete Lichtquellen sind Quecksilberlampen sowie Excimer-Laser von KrF ($\lambda$ = 248 nm). Nach dem bildmäßigen Belichten wird -gegebenenfalls nach kurzem Ausheizen (2 Sekunden bis 5 Minuten) (postbake) bei Temperaturen zwischen 60 und 160°C - mit üblichen wäßrigalkalischen Entwicklerlösungen - im allgemeinen bei pH-Werten zwischen 12 und 14 - entwickelt, wobei sich die unbelichteten Bereiche selektiv ablösen, während in den belichteten Bereichen nur wenig Abtrag stattfindet. Die Auflösung liegt im Submikron-Bereich. Die für die erfindungsgemäßen strahlungsempfindlichen Gemische benötigte Belichtungsenergie liegt im allgemeinen zwischen 15 und 200 mJ/cm$^2$ bei Schichtdicken von 1 µm.

Die in den Beispielen angegebenen Teile und Prozente sind, soweit nicht anders angegeben, Gewichtsteile bzw. Gewichtsprozente.

Beispiel 1

(a) Herstellung eines erfindungsgemäßen Kondensationsproduktes

20 Teile Poly(p-hydroxistyrol) ($\overline{M}_w$ ca. 8.000),
4 Teile 2,6-Dimethylol-p-kresol,
6 Teile $H_3PO_4$ (85 %ige wäßrige Lösung) und
100 Teile Ethylenglykolmonomethylether

werden unter $N_2$-Spülung 1 Stunde am Rückfluß gekocht, bis die $FeCl_3$-Probe der Lösung fast negativ ist. Dann wird die Lösung in 2.000 Teilen 0,5 %iger wäßriger Ammoniaklösung gefällt, abgesaugt, mit destilliertem Wasser gewaschen und schließlich im Gefriertrockner getrocknet.

(b) Herstellung eines erfindungsgemäßen strahlungsempfindlichen Gemisches und dessen photolithographische Untersuchung.

Aus 95 Teilen des unter (a) beschriebenen Kondensationsproduktes,
5 Teilen Tri(p-hydroxiphenyl)sulfoniumhexafluoroarsenat und
300 Teilen Methylglykolacetat
wird eine Photoresistlösung hergestellt. Diese Lösung wird durch einen Filter mit einem Porendurchmesser von 0,2 µm filtriert, auf einen oxidierten Siliciumwafer in einer Schichtdicke von 1 µm aufgeschleudert, auf einer Heizplatte eine Minute bei 90 °C getrocknet und anschließend mit einer Testmaske im Kontakt-Verfahren 2 Sekunden mit Excimerlaser der Wellenlänge $\lambda$ = 248 nm belichtet. Danach wird der Wafer 1 Minute bei 120 °C ausgeheizt und mit einem Entwickler vom pH-Wert 12,5 bis 14,5 entwickelt. Die Empfindlichkeit für 1 µm-Schichtdicke beträgt - 10 $mJ/cm^2$.

Beispiel 2

Aus 95 Teilen des in Beispiel 1 unter (a) beschriebenen Kondensationsproduktes,
5 Teilen Tri(p-hydroxiphenyl)sulfoniumtriflat und
300 Teilen Methylglykolacetat
wird eine Photoresistlösung hergestellt und entsprechend Beispiel 1 weiterverarbeitet und getestet. Die Empfindlichkeit (bei 1 µm Schichtdicke) beträgt 15 $mJ/cm^2$.

Beispiel 3

Aus 92 Teilen des in Beispiel 1 unter (a) beschriebenen Kondensationsproduktes,
8 Teilen p-(Hydroxiphenyl)dimethylsulfoniumhexafluorophosphat und
300 Teilen Methylglykolacetat
wird eine Photoresistlösung hergestellt und entsprechend Beispiel 1 weiterverarbeitet und getestet. Die Empfindlichkeit (bei 1 µm Schichtdicke) beträgt 65 $mJ/cm^2$.

Beispiel 4

Prüfung des delay time-Effekts:

Es werden gemäß Beispiel 2 hergestellte beschichtete Wafer unmittelbar nach der Belichtung sowie nach 10, 20, 30, 60 Minuten und 2 Stunden Lagerung bei Raumtemperatur bei 120 °C eine Minute ausgeheizt und entwickelt. Es wurden bestätigt, daß die Empfindlichkeit sowie die Strukturen keine wesentliche Änderung Zeigten.

**Patentansprüche**

**1.** Kondensationsprodukt, das aus einem phenolische Gruppierungen enthaltenden Polymeren und einer Di- oder Polymethylolverbindung in Gegenwart von Säure erhältlich ist, dadurch gekennzeichnet, daß es mindestens eine Gruppierung der allgemeinen Formel (I)

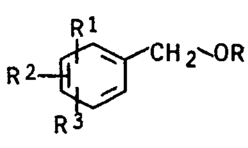

(I)

aufweist, worin

R für Wasserstoff oder eine säurelabile Gruppe, $R^1$, $R^2$ und $R^3$ untereinander gleich oder verschieden sind und für Wasserstoff, OH, Alkyl mit 1 bis 4 Kohlenstoffatomen oder einen an eine Polymerkette

gebundenen Rest stehen, mit der Maßgabe, daß einer der Reste $R^1$ bis $R^3$ an eine Polymerkette gebunden ist.

2. Kondensationsprodukt nach Anspruch 1, dadurch gekennzeicnet, daß als phenolische Gruppierungen enthaltendes Polymer Poly(p-hydroxistyrol) eingesetzt wird.

3. Kondensationsprodukt nach Anspruch 1 oder 2, dadurch gekennzeichnet, daß als Di- oder Polymethylolverbindung 2,6-Dimethylol-p-kresol eingesetzt wird.

4. Kondensationsprodukt nach einem der vorhergehenden Ansprüche, dadurch gekennzeichnet, daß für die Kondensation als Säure Phosphorsäure eingesetzt wird.

5. Kondensationsprodukt nach einem der vorhergehenden Ansprüche, dadurch gekennzeichnet, daß es ein mittleres Molekulargewicht $\overline{M}_w$ zwischen 1000 und 50.000 aufweist.

6. Verfahren zur Herstellung eines Kondensationsproduktes nach einem der vorhergehenden Ansprüche, dadurch gekennzeichnet, daß Poly-(p-hydroxistyrol) mit 2,6-Dimethylol-p-kresol in einem polaren Lösungsmittel in Gegenwart einer Säure, vorzugsweise Phosphorsäure, bei Temperaturen zwischen 50 und 130 °C kondensiert wird.

7. Strahlungsempfindliches Gemisch, im wesentlichen bestehend aus
   (a) einem in Wasser unlöslichen, in wäßrig-alkalischen Lösungen löslichen Bindemittel oder Bindemittelgemisch und
   (b) einer bei Bestrahlung eine starke Säure bildenden Verbindung,
   dadurch gekennzeichnet, daß als Komponente (a) ein Kondensationsprodukt nach einem der Ansprüche 1 bis 5 eingesetzt wird.

8. Strahlungsempfindliches Gemisch nach Anspruch 7, dadurch gekennzeichnet, daß das Bindemittel (a) in einer Menge von 80 bis 99,5 Gew.-%, bezogen auf die Gesamtmenge des strahlungsempfindlichen Gemisches, enthalten ist.

9. Strahlungsempfindliches Gemisch nach einem der Ansprüche 7 oder 8, dadurch gekennzeichnet, daß als bei Bestrahlung eine starke Säure bildende Verbindung (b) ein Oniumsalz der allgemeinen Formel (II) oder (III)

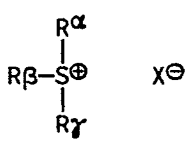

(II)

oder

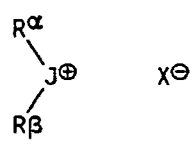

(III)

eingesetzt wird, worin $R^\alpha$, $R\beta$ und $R\gamma$ untereinander gleich oder verschieden sind und für Alkyl, Aryl, Aralkyl oder den Rest

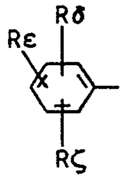

stehen, worin $R\delta$, $R\epsilon$ und $R\zeta$ untereinander gleich oder verschieden sind und für H, OH, Halogen, Alkyl oder Alkoxi stehen und $X^\ominus$ = $AsF_6^\ominus$, $SbF_6^\ominus$, $PF_6^\ominus$, $BF_4^\ominus$, $C10_4^\ominus$ oder $CF_3SO_3^\ominus$ ist.

10. Strahlungsempfindliches Gemisch nach einem der Ansprüche 7 bis 9, dadurch gekennzeichnet, daß Komponente (b) in einer Menge von 0,5 bis 20 Gew.-%, bezogen auf die Gesamtmenge des strahlungsempfindlichen Gemisches, enthalten ist.

11. Strahlungsempfindliches Gemisch nach einem der Ansprüche 7 bis 10, dadurch gekennzeichnet, daß es zusätzlich einen Sensibilisator enthält, der Strahlung absorbiert und auf Komponente (b) überträgt.

12. Strahlungsempfindliches Gemisch nach einem der Ansprüche 7 bis 11, dadurch gekennzeichnet, daß es zusätzlich bis zu 1 Gew.-%, bezogen auf die Gesamtmenge der Komponenten (a) + (b) eines Haftvermittlers, Tensids oder Farbstoffs enthält.

13. Verfahren zur Herstellung lichtempfindlicher Beschichtungsmaterialien, dadurch gekennzeichnet, daß ein strahlungsempfindliches Gemisch gemäß einem der Ansprüche 7 bis 12 eingesetzt wird.

14. Verfahren zur Herstellung von Reliefstrukturen durch Auftragen eines strahlungsempfindlichen Gemisches in einer Schichtdicke von 0,1 bis 5 µm auf ein in üblicher Weise vorbehandeltes Substrat, Trocknen bei Temperaturen von 70 bis 120 °C, bildmäßiges Belichten, Erhitzen auf Temperaturen von 60 bis 160 °C und Entwickeln mit einer wäßrig-alkalischen Lösung, dadurch gekennzeichnet, daß ein strahlungsempfindliches Gemisch nach einem der Ansprüche 7 bis 12 eingesetzt wird.